# EUROPÄISCHE PATENTANMELDUNG

(11) **EP 4 760 244 A1**
(43) Veröffentlichungstag der Anmeldung: **17.06.2026**
(21) Anmeldenummer: 25215793.8
(22) Anmeldetag: 14.11.2025
(51) Int. Cl.: G01N 23/046, H01M 10/42

(54) **VORRICHTUNG UND VERFAHREN FÜR EIN UNTERSUCHEN EINES AKKUMULATORS**

(30) Priorität: 12.12.2024 DE 102024211849
(71) Anmelder: Forschungszentrum Jülich GmbH, 52428 Jülich (DE)
(72) Erfinder: WECKELMANN, Luca Guido, 52428 Jülich (DE); DZIECIOL, Krzysztof, 52428 Jülich (DE); KÖNIG, Christoph, 52064 Aachen (DE); TSAI, Chih-Long, 52372 Kreuzau (DE); TEMPEL, Hermann, 52372 Kreuzau (DE); EICHEL, Rüdiger-A., 52428 Jülich (DE)
(74) Vertreter: Gille Hrabal Partnerschaftsgesellschaft mbB Patentanwälte

(57) **Zusammenfassung**

Die Erfindung betrifft eine Zelle (1) für ein Untersuchen eines Akkumulators mithilfe von Röntgencomputertomografie mit einem langgestreckten Gehäuse (2) für eine Aufnahme eines Akkumulators, einer Öffnung (3) und einer Aufnahme (8) für ein Einsetzen des Akkumulators in das langgestreckte Gehäuse (2), mit elektrischen Kontakten (6, 7) für ein Kontaktieren der Elektroden eines eingesetzten Akkumulators, wobei ein elektrischer Kontakt (6, 7) eine aus Metall bestehende Schicht ist, die auf einem elektrisch nicht leitenden Material aufgebracht ist, wobei die aus Metall bestehende Schicht nicht dicker als 1 µm ist.

Die Erfindung betrifft außerdem ein Verfahren für die Durchführung einer Untersuchung eines Akkumulators.

## Beschreibung

Die Erfindung betrifft eine Vorrichtung und ein Verfahren für ein Untersuchen eines Akkumulators.

Ein Akkumulator (kurz Akku) ist ein wiederaufladbarer Energiespeicher, der elektrische Energie speichert und bei Bedarf wieder abgibt. Ein Akkumulator funktioniert auf Basis von chemischen Reaktionen. Ein Akkumulator umfasst eine Anode, die Elektronen während des Entladens abgibt. Ein Akkumulator umfasst eine Kathode, die Elektronen während des Entladens aufnimmt. Ein Akkumulator umfasst einen Elektrolyten, der einen Ionentransport zwischen Anode und Kathode ermöglicht.

Es gibt beispielsweise Lithium-Ionen-Akkus, Blei-Säure-Akkus, Nickel-Metallhydrid-Akkus (NiMH), Nickel-Cadmium-Akkus (NiCd) sowie Feststoff-Akkus.

Ein Feststoff-Akku umfasst einen festen Stoff als Elektrolyt, der Ionen zwischen Anode und Kathode transportiert. Der Elektrolyt kann beispielsweise aus einem keramischen oder polymeren Material bestehen.

Die vorliegende Erfindung bezieht sich auf die Untersuchung von Akkus, insbesondere von Feststoff-Akkus.

Mithilfe der vorliegenden Erfindung soll ein Akkumulator mithilfe von Röntgencomputertomografie (engl.: X-Ray Computed Tomography, kurz XCT) untersucht werden können. Dies soll mithilfe einer dafür geeigneten Zelle ermöglicht werden.

Diese Zielsetzung wird mit einer Zelle erreicht, die die Merkmale des ersten Anspruchs umfasst. Der Nebenanspruch betrifft ein Verfahren zur Untersuchung eines Akkumulators mithilfe dieser Zelle. Vorteilhafte Ausgestaltungen ergeben sich aus den abhängigen Ansprüchen.

Um die Zielsetzung zu erreichen, wird eine Zelle mit einem Gehäuse für ein Untersuchen eines Akkumulators mithilfe von Röntgencomputertomografie bereitgestellt. Das Gehäuse kann langgestreckt sein. Die Zelle kann eine Aufnahme für einen Akkumulator umfassen. Die Aufnahme kann innerhalb des Gehäuses vorhanden sein. Die Zelle kann eine Öffnung aufweisen. Durch die Öffnung hindurch kann ein Akkumulator in die Zelle gebracht werden. Die Zelle kann elektrische Kontakte für ein Kontaktieren der Elektroden eines eingesetzten Akkumulators umfassen. Ein elektrischer Kontakt kann eine aus Metall bestehende Schicht sein. Die Schicht kann auf einem elektrisch nichtleitenden Material aufgebracht sein. Die aus Metall bestehende Schicht kann nicht dicker als 10 µm oder nicht dicker als 1 µm oder nicht dicker als 0,5 µm oder nicht dicker als 0,1 µm sein.

Ein in die Aufnahme eingesetzt Akkumulator kann von den elektrischen Kontakten unmittelbar kontaktiert werden. Mithilfe der elektrischen Kontakte kann ein in der Aufnahme eingesetzter Akkumulator während einer Untersuchung geladen und entladen werden. Ist als Kontakt eine sehr dünne Schicht vorgesehen, wird eine Röntgenstrahlung während der Untersuchung im Bereich der Aufnahme kaum durch den Kontakt beeinträchtigt.

Durch ein langgestrecktes Gehäuse können Komponenten entfernt von der Aufnahme angeordnet werden, die eine Röntgenstrahlung beeinträchtigen könnten. Ist das Gehäuse langgestreckt, dann kann dies daher ebenfalls dazu beitragen, dass eine Röntgenstrahlung während der Untersuchung im Bereich der Aufnahme kaum beeinträchtigt wird.

Die Länge eines elektrischen Kontakts kann wenigstens 5 mm oder wenigstens 10 mm betragen. Ein Ende eines elektrischen Kontakts kann dann an einen eingesetzten Akkumulator kontaktieren. Das andere Ende ist dann wenigstens 5 mm oder wenigstens 10 mm von dem Akkumulator entfernt. Eine Röntgenstrahlung störende Komponenten können so verbessert von dem Bereich der Aufnahme entfernt angeordnet werden. Durch eine solche Mindestlänge kann weiter verbessert erreicht werden, dass eine Röntgenstrahlung während der Untersuchung im Bereich der Aufnahme sowie angrenzend an die Aufnahme kaum beeinträchtigt wird.

Die Länge eines elektrischen Kontakts kann in technisch sinnvoller Weise nicht mehr als 30 mm oder nicht mehr als 20 mm betragen.

Das Metall eines elektrischen Kontakts kann Kupfer sein. Dieses Metall ist besonders gut geeignet, um Strom gut leiten zu. Durch das Vorsehen einer sehr dünnen Schicht kann vermieden werden, dass eine Röntgenstrahlung übermäßig durch Kupfer beeinträchtigt wird.

Die Aufnahme für den Akkumulator kann in einem mittleren Drittel des Gehäuses angeordnet sein. Die Aufnahme für den Akkumulator kann in einem mittleren Drittel entlang der Länge des langgestreckten Gehäuses angeordnet sein. An den Enden des Gehäuses kann dann Platz bereitgehalten werden, um Funktionselemente der Zelle unterzubringen. Auch dies kann dazu beitragen, dass eine Röntgenstrahlung während der Messung kaum beeinträchtigt wird. Außerdem kann die Zelle dann in der Regel leicht in handelsübliche Scanner, mit denen eine Untersuchung durchgeführt wird, integriert werden.

Die Zelle kann sich von einem Ende oder von beiden Enden aus zur Aufnahme hin verjüngen. Ein Ende, das damit breiter ist als ein Abschnitt zwischen den beiden Enden der Zelle, kann Raum für Funktionselemente bereitstellen, ohne dass dies eine Röntgenstrahlung während einer Messung in relevanter Weise beeinträchtigen würde.

Es kann eine Druckausübungseinrichtung vorhanden sein, mit der ein Druck auf einen in der Aufnahme befindlichen Akkumulator ausgeübt werden kann. Es kann dadurch ein Akkumulator in Abhängigkeit von einem Druck untersucht werden.

Die Druckeinrichtung kann eine Schraube für ein Einstellen eines Drucks umfassen. Durch Hineindrehen oder Herausdrehen der Schraube kann der Druck geändert werden. Es kann so auf technisch besonders einfache Weise ein gewünschter Druck eingestellt werden. Die Schraube kann manuell oder mithilfe eines Motors eingestellt werden. Auch eine automatisierte Einstellung mithilfe einer Steuereinrichtung ist möglich.

Es kann eine Feder vorhanden sein, über die ein Druck von der Druckausübungseinrichtung auf einen in der Aufnahme befindlichen Akkumulator übertragen werden kann. Druckschwankungen können durch die Feder vorteilhaft aufgefangen werden. Die Feder kann aus einem elektrisch leitenden Material wie Metall bestehen, um zu einem Stromtransport beizutragen.

Es kann ein Kraftsensor vorhanden sein. Die Zelle kann so eingerichtet sein, dass ein Druck, der auf einen in die Aufnahme eingesetzten Akkumulator ausgeübt wird, durch den Kraftsensor gemessen werden kann. Es kann so besonders genau das Verhalten eines Akkumulators in Abhängigkeit von einem auf den Akkumulator ausgeübten Druck untersucht werden.

Es können ein oder mehrere Stäbe innerhalb des Gehäuses vorhanden sein. Über die ein oder mehrere Stäbe kann ein elektrischer Strom zu den Kontakten fließen. Die Aufnahme kann zwischen Stäben angeordnet sein. Es ist mithilfe von Stäben auf technisch einfache Weise möglich, eine Aufnahme so anzuordnen, dass eine Röntgenstrahlung kaum beeinträchtigt wird.

Ein Stab kann aus einem Vollmaterial bestehen, um einen großen Querschnitt für einen Stromtransport zu erhalten. Ein Stab kann aber auch innen hohl sein.

Zumindest ein Stab kann innerhalb des Gehäuses verschiebbar gelagert sein. Ein solcher Stab kann dann dazu genutzt werden, um Druck von einer Druckübertragungseinrichtung auf einen Akkumulator zu übertragen, der in die Aufnahme eingesetzt ist. Ein verschiebbar gelagerter Stab kann dazu genutzt werden, einen auf einen eingesetzten Akkumulator ausgeübten Druck auf einen Kraftsensor zu übertragen, um den ausgeübten Druck messen zu können. Der Kraftsensor kann dadurch vorteilhaft entfernt von der Aufnahme angeordnet werden.

Die Zelle kann so eingerichtet sein, dass die Aufnahme luftdicht abgeschirmt bzw. abgedichtet werden kann. Ein Akkumulator kann so vor schädlichen Einflüssen durch Luft geschützt werden.

Es kann ein Faltenbalg vorhanden sein, über den ein Druck auf einen in der Aufnahme befindlichen Akkumulator ausgeübt werden kann. Der Faltenbalg kann dazu beitragen, einen Druck geeignet übertragen zu können. Der Faltenbalg kann dazu beitragen, eine Aufnahme luftdicht nach außen abzuschirmen.

Die Erfindung betrifft auch ein Verfahren für ein Untersuchen eines Akkumulators mit einer zuvor beschriebenen Zelle. Ein Akkumulator kann in die Aufnahme der Zelle eingesetzt werden. Dies kann in einer Inertgasatmosphäre geschehen.

Das Gehäuse kann zwei hohle Stäbe umfassen. Der eine Hohlstab kann über den anderen Hohlstab geschoben werden. Es gibt dann einen inneren und einen äußeren Hohlstab. Komponenten eines Akkumulators können dann beispielsweise direkt an der Öffnung des inneren Hohlstabs eingesetzt werden. Danach kann der äußere Hohlstab über den inneren Hohlstab geschoben werden. Dieser Weg ist besonders zu bevorzugen.

Der innere Hohlstab kann ein innerer Hohlzylinder sein. Der innere Hohlstab ist grundsätzlich kürzer als der äußere Hohlstab. Der innere Hohlstab kann wenigstens 30% kürzer als der äußere Hohlstab sein. Ist der äußere Hohlstab 100 Einheiten lang, dann ist der innere Hohlstab nicht mehr als 70 Einheiten lang. Die Länge des inneren Hohlstabs kann wenigstens 30% der Länge des äußeren Hohlstab betragen. Ist der äußere Hohlstab 100 Einheiten lang, dann ist der innere Hohlstab wenigstens 30 Einheiten lang. Der innere Hohlstab kann nur halb so lang wie der äußere Hohlstab sein. Es kann dann auf besonders geeignete Weise ein Akkumulator in einem mittleren Bereich des Gehäuses aufgenommen werden.

Der Akkumulator bzw. seine Komponenten können aber auch in einer weniger bevorzugten Ausführungsform zusammen mit elektrischen Kontakten und ggfs. weiteren Komponenten mithilfe eines Stabs in das Gehäuse der Zelle hineingeschoben werden. Im Anschluss daran kann das Gehäuse luftdicht verschlossen werden. Der eingesetzte Akkumulator kann anschließend mithilfe von Röntgentomografie untersucht werden.

Während einer Untersuchung kann der eingesetzte Akkumulator geladen und entladen werden. Der Akkumulator kann also während der Untersuchung zyklisiert werden.

Während einer Untersuchung kann ein Druck auf den Akkumulator ausgeübt werden. Der Druck kann während der Untersuchung gemessen werden. Ein Akkumulator kann so in Abhängigkeit von Druck mithilfe von Röntgentomografie untersucht werden. Es kann mithilfe von Mikro-Röntgencomputertomographie, auch Mikrocomputertomographie genannt, untersucht werden.

Die Mikrocomputertomographie (µCT) erlaubt, analog zur konventionellen RöntgenComputertomographie, die zerstörungsfreie Prüfung von Werkstoffen und Bauteilen hinsichtlich lokaler Dichteunterschiede. Somit können Poren, Lunker und Risse sowie unterschiedliche Phasen oder Bauteilkomponenten detektiert und analysiert werden. Hierzu kann aus Radiographien unter verschiedenen Winkeln über eine 3D-Rekonstruktion ein virtuelles 3D Modell des Werkstoffs oder Bauteils nachgebildet werden. Die Auflösung kann im Mikrometer-Bereich liegen.

Mikro-Röntgencomputertomographie (engl.: X-Ray Computed Tomography, kurz XCT) ist eine nicht-destruktive und drei-dimensionale Mikroskopiemethode, die es seinem Anwender erlaubt, eine Probe morphologisch vollumfänglich, das heißt sowohl von außen als auch von innen, auf Mikroebene zu erfassen. Basierend auf der Tomographie lässt sich ein dreidimensionales Objekt rekonstruieren, das die bestrahlte Probe abbildet und Schnitt für Schnitt untersucht werden kann. Daher ist die Röntgentomografie auch in der Akkumulatorforschung ein wertvolles Instrument, um Materialien oder Zellen zu charakterisieren und so Rückschlüsse auf die Beschaffenheit oder die Verhaltensweisen jener zu erhalten. Besonders die Untersuchung von Akkumulatoren vor und nach dem Zyklisieren, aber auch während des Zyklisierens, ist von großem Interesse. Demnach bieten Zellen, die das Zyklisieren zulassen, aber auch gleichzeitig für die Untersuchung in Computertomographen geeignet sind, einen erheblichen Mehrwert. Der angewandte Druck auf die Komponenten eines Akkumulators stellt insbesondere für Festkörperakkumulatoren einen wichtigen Faktor dar, wodurch die Aufzeichnung von Druck- bzw. Kraftänderung während des Zyklisierens ebenso zu einer lehrreichen Messgröße avanciert. Neben Röntgentomographie, die auf von einem Teilchenbeschleuniger erzeugte Synchrotronstrahlung basiert, existieren laborbasierte Geräte, die ohne externe Strahlenquelle auskommen und sich in einem kompakten Gerät in einem üblichen Labor nutzen lassen.

Die vorliegende Erfindung kann an diesem Punkt ansetzen. Das Zyklisieren von Akkumulatoren mit gleichzeitiger Messung von 2-dimensionalen Radiogrammen bzw. sukzessivem Messen von 3-dimensionalen Scans mittels Labor basierter Mikro-Röntgencomputertomographie und dem kontinuierlichen Aufzeichnen von Kräfteänderung in einer Zelle ist möglich. Akkumulatorkomponenten können während einer Untersuchung luftdicht abgeschirmt werden. Der Bereich der Aufnahme kann so gestaltet sein, dass eine Wechselwirkung mit Röntgenstrahlung minimiert werden kann. Es können chemisch-beständige Zellkomponenten eingesetzt werden. Neben den aufgeführten Punkten bietet die Zelle zudem die Möglichkeit, den Druck nach Zusammenbau während einer Untersuchung zu regulieren. Ein anwenderfreundliches Befüllen einer Zelle innerhalb einer inerten Atmosphäre ist möglich.

Eine erfindungsgemäße kraftmessende in-operando Zelle für Akkumulatoren kann diversen Ansprüchen genügen, die da wären: chemische Beständigkeit, Durchlässigkeit von Röntgenstrahlung, praktikable Handhabung, Luftdichtigkeit, elektrische Kontaktierbarkeit, zuverlässige Kraftaufzeichnung und Abmaße passend für die Microcomputertomographie.

Es kann wichtig sein, einen möglichst hohen Kontrast zwischen den verschiedenen Materialien, die von Interesse sind, zu erreichen, um eine mögliche laterale Auflösung vollumfänglich nutzen zu können. Dies kann wichtig sein, wenn etwaige zu untersuchende Materialien einen geringen Absorptionskoeffizienten aufweisen, sich aber in unmittelbarer Nähe von stark absorbierenden Materialien befinden.

In Zellen, mit denen Anoden aus metallischem Lithium untersucht werden sollen, ist das Lithium in der Röntgentomographie aufgrund seiner geringen Dichte und Elektronenanzahl im herkömmlichen Modus mit Absorptionskontrast nahezu nicht sichtbar. Beruhend auf der minimalen Wechselwirkung zwischen Röntgenstrahlung und Lithium kann daher eine auf den Phasenkontrast basierte Messung durchgeführt werden, wodurch die Grenzflächen zum Lithium sichtbar werden. Diese Messweise kann jedoch mit starken Einbußen der Bildqualität einhergehen, die auf der Verminderung des Photonenflusses basiert, was wiederum zu einer Verschlechterung der Bildqualität führt. Im Allgemeinen gilt es daher, einen möglichst hohen Photonenfluss im Bereich von Interesse sicherzustellen, um ein hohes Signal-Rausch-Verhältnis und somit eine verbesserte Kontrastauflösung zu erhalten. Ein hoher Photonenfluss ist mithilfe der Erfindung möglich.

Die Dichtung der Zelle gegenüber Luft kann aufgrund von luftempfindlichen Akkumulatormaterialien von besonderer Bedeutung sein. Um reproduzierbare Ergebnisse zu erhalten und eine Vergleichbarkeit mit herkömmlich in der Forschung genutzten Zellen zu gewährleisten, kann die Dichtigkeit nach Verlassen der inerten Atmosphäre bei Bedarf zu jedem Zeitpunkt gewährleistet werden.

Neben einer zuverlässigen Dichtung erfordern luftempfindliche Materialien einen Zusammenbau der Zelle in einer inerten Atmosphäre wie die in einem mit Argon gefüllten Handschuhkasten. Dies stellt Bedingungen an ein praktikables Design, das ein einfaches Handhaben und einfachen Zusammenbau der Akkumulatorzelle innerhalb der geschützten Atmosphäre zulässt. Zudem können gewisse Voraussetzungen durch die Abmaße eines Scanners für die Durchführung einer Röntgentomographie (wie zum Beispiel ZEISS Xradia Versa) gegeben sein, um eine maximale Auflösung ausschöpfen zu können. Diese äußern sich in den Formfaktoren von Photonenquelle inklusiver Filterrevolver und Detektor. Ein maximaler Photonenfluss wird erreicht, wenn sowohl die Quelle als auch der Detektor so nah wie möglich an die Probe herangefahren werden können. Dies kann durch eine erfindungsgemäße Zelle erreicht werden. Eine Kompatibilität mit einem handelsüblichen Scanner kann durch die erfindungsgemäße Zelle erreicht werden.

Von Bedeutung kann die mechanische Eigenstabilität einer Zelle sein, um mögliche Bewegungen vollumfänglich zu eliminieren. Auch dies kann durch eine erfindungsgemäße Zelle erreicht werden.

Durch eine erfindungsgemäße Zelle kann ein elektrisches Potential zwischen Kathode und Anode angelegt werden.

Die Kraft, die auf einen eingesetzten Akkumulator sowohl beim initialen Zusammenbau als auch während des Zyklisierens wirkt, kann mit Hilfe der Erfindung bei Bedarf gemessen werden. Ziel kann es dann sein, die Kraft auch nach dem Zusammenbau in einer inerten Atmosphäre am Scanner noch einstellen zu können. Dies kann durch eine bewegliche Dichtung einer erfindungsgemäßen Zelle erreicht werden, die die eingestellte und gemessene Kraft möglichst nicht beeinflusst und die Dichtigkeit gegenüber einer statischen Dichtung möglichst nicht vermindert. Auch dies kann eine erfindungsgemäße Zelle leisten.

Einer der schwerwiegendsten Nachteile ist die Verwendung von hoch absorbierenden Stromabnehmern (wie Edelstahl oder Kupfer), die die Darstellbarkeit von Lithium auf der Anodenseite erheblich erschweren. Dies fällt besonders ins Gewicht, wenn Akkumulatorsysteme untersucht werden, die auf einer sich auf den Stromabnehmer bildenden Lithiumschicht basieren, sogenannter "anode free" oder "anode less" (zu Deutsch anodenfrei oder weniger Anode) Akkumulatoren. Hierbei ist gerade die Morphologie des sich gebildeten Lithiums von großem Interesse. Weniger absorbierende Materialien wie Aluminium bzw. Kohlenstoff in Form von Karbon reagieren mit Lithium bei Kontakt bzw. bei Kontakt unter einem elektrischen Potential und beeinflussen somit das elektrochemische Verhalten eines Akkumulators. Solche Materialien sind daher bevorzugt entsprechend zu vermeiden.

PEEK ist eines der am besten geeigneten Polymere für eine Zelle. Dies basiert auf der geringen Wasserdampfdurchlässigkeit, Kompatibilität mit Lithiummetall als auch mit Lithium-Ionen-Elektrolyten und hoher Transparenz für Röntgenstrahlen. Beispielsweise ein Gehäuse der Zelle kann daher vollständig oder überwiegend aus PEEK gebildet sein. Ein Gehäuse kann aber auch aus einem anderen Kunststoff gefertigt sein.

Es ist verschiedenen Gasen wie Stickstoff möglich, Polymere zu durchdringen, was gerade bei längeren Experimenten zu nicht vernachlässigbaren Reaktionen innerhalb der Zelle führen und somit die Ergebnisse beeinflussen kann. Das Gehäuse kann daher beispielsweise außen beschichtet sein, so zum Beispiel mit Aluminium, um dies zu vermeiden.

Ein Gas basierter Druck weist diverse Nachteile auf. Zunächst verringert dichteres Gas und insbesondere Gas mit höherer Atomnummer den Photonenfluss und damit die Bildqualität. Des Weiteren setzt die Druckregulierung mittels Gases eine Gasversorgung mit dem entsprechenden Gas in der Nähe des Scanners voraus mit entsprechender Möglichkeit des Aufzeichnens der Gasdruckänderung. Zudem begünstigt ein erhöhter Gasdruck das Austreten des Gases aus der Zelle, was zu Druckänderung führt, die von der Druckänderung verursacht durch die Zelle unterschieden werden muss. Zuletzt fällt die Art der ausgeübten Kraft und die daraus resultierende mechanische Spannungen auf den Akkumulator in das Gewicht. Hierbei wirkt von allen Seiten eine Kraft auf den Akkumulator, wohingegen bei üblichen Akkumulatoren nur eine Kraft in Richtung der Stapelrichtung der einzelnen Akkumulatorkomponenten wirkt, wodurch die Vergleichbarkeit des Zyklisierens in der Zelle leiden kann. Erfindungsgemäß wird daher ein gasbasierter Druck vorteilhaft vermieden.

O-Ringe eignen sich bei statischen Anwendungen mit den entsprechenden Materialien als zuverlässige Dichtung. Allerdings weisen O-Ringe bei dynamischen Anwendungen in Verbindung mit spanend bearbeiteten Polymeren Schwächen auf. Aufgrund der Bewegung werden die O-Ringe an den Rändern mechanischer Belastung ausgesetzt, die zu Mikrorissen führen und damit Undichtigkeiten verursachen können. Erfindungsgemäß werden daher bevorzugt O-Ringe für ein Abdichten verwendet, die unbeweglich angeordnet sind. Es kann sein, dass die Zelle ausschließlich unbewegliche O-Ringe für ein Abdichten verwendet. Ein O-Ring kann aus einem Elastomer bestehen. Ein O-Ring kann vorteilhaft beschichtet sein.

Spanend bearbeitete Polymere wie PEEK können eine hohe Oberflächenrauigkeit aufweisen, weswegen ein O-Ring dann mit ausreichender Kraft gegen eine Wand gedrückt werden muss, um alle Unebenheiten auszugleichen. Dies im Umkehrschluss vermindert die Dynamik der beweglichen Dichtung und erhöht die Reibung, was wiederum zu mechanischen Schäden führen kann. Auch deshalb sind O-Ringe zu bevorzugen, die unbeweglich angeordnet sind.

Eine Aufnahme kann aus Praktikabilitätsgründen einen Innendurchmesser von nicht mehr als 8 mm oder nicht mehr als 6 mm oder nicht mehr als 3 mm aufweisen.

Als Kontakte können mit Kupfer beschichtete Polymerzylinder fungieren. Die Länge kann sich auf ca. 1 cm belaufen, um beispielsweise eine ausreichende Entfernung zu axial darüber bzw. darunterliegenden Stahlstäben zu garantieren und den Photonenfluss im Bereich eines eingesetzten Akkumulators nicht zu vermindern. Bei der Beschichtung wird bevorzugt Kupfer als Material gewählt, das gewöhnlich als Stromabnehmer in Akkumulatoren verwendet wird. Von besonderer Bedeutung bei der Beschichtung ist die Dicke, die sich im sub-mikrometer Bereich befinden kann und damit den Photonenfluss nicht entscheidend beeinflusst und keine Artefakte verursacht. Eine allseitige Beschichtung eines Polymer-Zylinders kann den elektrischen Kontakt zwischen Akkumulator und beispielsweise einem Stahlstab zuverlässig herstellen, der letztendlich in Achsrichtung mit der elektrischen Kontaktierung außerhalb der Zelle verbunden sein kann.

Als Gehäusematerial kann PEEK aufgrund der oben genannten Vorteile genutzt werden. Um die Dichtigkeit der Zelle auch für lange Experimente gegenüber Gasen zu gewährleisten, können zum einen Dichtungsringe, die mit einem fluorhaltigen Polymer beschichtet sein können (vorzugsweise FEP oder PTFE) genutzt werden. Zum anderen das Gehäuse der Zelle mit einer im Nanometer-Bereich dicken Aluminiumschicht beschichtet sein. Ersteres begründet sich auf der signifikant gesteigerten Stickstoffdichtigkeit von fluorhaltigen Polymeren gegenüber nicht fluorhaltigen Polymeren. Zudem steigert es die Vergleichbarkeit zwischen der erfindungsgemäßen Zelle und herkömmlichen, in der Akkumulatorforschung genutzten Zellen, die PTFE-Dichtungen nutzen. Zweiteres begründet sich auf der gesteigerten Undurchlässigkeit von Aluminium für Gase bei gleichzeitiger moderater Absorption von Röntgenstrahlung, die bei sehr dünnen Schichten die Messung nicht entscheidend beeinflusst.

Während eine Seite der Zelle statisch mit Dichtungsringen gedichtet sein kann, kann die andere Seite der Zelle dynamisch verschlossen werden, um beispielsweise das Justieren der Kraft auch nach dem Zusammenbauen zu ermöglichen. Dies kann mit einem einseitig geschlossenen Faltenbalg gelöst werden, der am oberen Ende der Zelle eingebaut sein kann und über einen ausreichend großen Weg verfügen kann, um eine eingestellte Kraft im gewünschten Bereich anzupassen. Besteht der Faltenbalg aus Metall, dann kann die eingeschränkte Dichtigkeit von Polymeren gegenüber Luft eliminiert und ein elektrischer Kontakt ermöglicht werden.

Das Gehäuse kann eine Verjüngung im Bereich der Aufnahme aufweisen und so konstruiert sein, dass ein Detektor und eine Röntgenquelle unmittelbar an das Gehäuse herangefahren werden können, ohne oben oder unten an weiter herausstehende Komponenten der Zelle zu stoßen. Zudem kann der Sockel einer Zelle vollständig oder überwiegend aus Edelstahl gefertigt sein. Ein Kopf der Zelle kann ganz oder überwiegend aus Aluminium gefertigt sein, um den Schwerpunkt möglichst tief zu halten und so eine stabile Zelle frei von Bewegung während der Messung zu gewährleisten.

Die wirkende Kraft kann mit einem Kraftsensor, der im Sockel der Zelle verbaut sein kann, gemessen werden. Ein elektrischer Anschluss für einen eingesetzten Akkumulator kann über das metallische Gehäuse des Kraftsensors, der unmittelbar mit dem metallischen Sockel in Kontakt sein kann, hergestellt werden.

Die Zelle kann so vorzugsweise auseinander gebaut werden, dass ein als Teil des Gehäuses dienender Hohlzylinder oder ein hohles Rohr innerhalb einer inerten Atmosphäre befüllt werden kann. Dabei können die einzelnen Komponenten direkt an der Öffnung des Hohlzylinders bzw. des hohlen Rohrs aufeinandergelegt werden, sodass diese nicht tief im Inneren des Gehäuses gestapelt oder die Komponenten tief das Gehäuse hineingeschoben werden müssen. Anschließend kann eine Hülse über den Hohlzylinder bzw. das hohle Rohr darübergestülpt werden. Eine Kraft kann mittels einer Schraube, die ein Feingewinde besitzen kann, eingestellt werden.

Eine Feder kann zum Aufrechterhalten der Kraft bei sich ändernder Akkumulatordicke vorgesehen sein. Möglichst dünne Zellwände in der Zelle sind zu bevorzugen. Ein Innendurchmesser von beispielsweise 6 mm begründet sich darauf, dass dieser in der gleichen Größenordnung wie übliche in der Akkumulatorforschung genutzte Zellen ist, aber gleichzeitig kleiner, sodass die ganze Elektrode auch bei vergrößerter Ansicht noch zu erfassen ist und die Menge des zu durchdringenden Materials klein gehalten werden kann.

Ein aus PEEK bestehender Hohlzylinder bzw. hohles Rohr kann mittels der Zerspanungstechnik des Drehens hergestellt werden. Zur Beschichtung des Zylinders mit einer dünnen, gasundurchlässigen Aluminiumschicht können physikalisch Gasphasenabscheidungen wie zum Beispiel das Ionenplattieren (engl.: ion vapor deposition, kurz IVD) verwendet werden. Eine Kupferbeschichtung für Kontakte kann mit einer Gleichspannungs-Sputteranlage realisiert werden.

Alle Polymerbestandteile der Zelle, die in Kontakt mit den Akkumulatorkomponenten sind oder sich in unmittelbarer Nähe befinden, können vor dem Einschleusen in die inerte Atmosphäre unter Vakuum und erhöhter Temperatur (ca. 150 °C für PEEK) für mehrere Stunden getrocknet werden. Dadurch kann sichergestellt werden, dass zurückbleibendes Wasser aus der Luft nicht mit den Akkumulatorkomponenten reagiert.

Nachfolgend wird die Erfindung anhand von Figuren näher erläutert.

Es zeigen
Figur 1: Schnitt durch eine Zelle;
Figur 2: vergrößerten Ausschnitt;
Figur 3: perspektivische Darstellung der Zelle;
Figur 4: Zelle mit Einschnürung;
Figur 5: Ausschnitt einer Zelle.

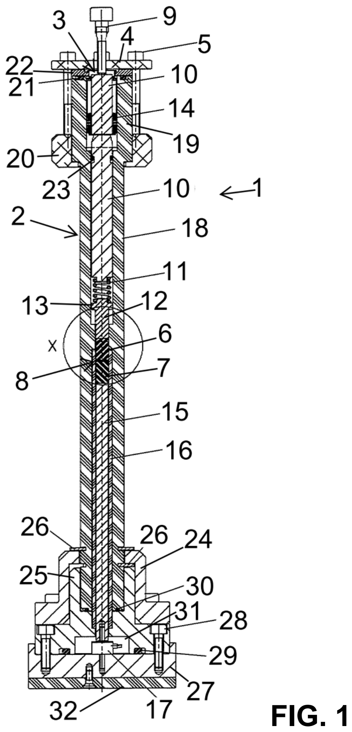

Die Figur 1 zeigt einen Schnitt durch eine Zelle 1 für ein Untersuchen eines Akkumulators mithilfe von Röntgencomputertomografie. Die Zelle 1 umfasst ein Gehäuse 2 für eine Aufnahme eines Akkumulators. Das Gehäuse 2 kann vollständig oder überwiegend aus einem elektrischen Isolator gebildet sein. Das Gehäuse 2 kann aus einem Teil bestehen. Das Gehäuse 2 kann aus mehreren Teilen zusammengesetzt sein. Das Gehäuse 2 kann einen Hohlzylinder oder einen hohlen Stab umfassen. Die beiden Enden des Hohlzylinders bzw. des hohlen Stabs können während des Betriebs luftdicht verschlossen sein. Das Gehäuse 2 kann zumindest überwiegend wie ein Hohlzylinder oder ein hohler Stab geformt sein. Ein hohler Stab kann sich zu einem Ende hin verbreitern, so zum Beispiel stufenförmig. Mehrere Teile des Gehäuses 2 können fest miteinander verbunden sein. Das Gehäuse 2 kann luftdicht sein. Das Gehäuse 2 kann langgestreckt sein. Die Länge des Gehäuses 2 ist dann größer als die maximale Breite sowie die maximale Tiefe des Gehäuses 2 bzw. der maximale Durchmesser des Gehäuses 2. Die Länge des Gehäuses 2 kann mehr als zweimal so groß oder mehr als dreimal so groß oder mehr als viermal so groß wie die maximale Breite sowie die maximale Tiefe bzw. der maximale Durchmesser des Gehäuses 2 sein. Die Länge des Gehäuses 2 kann nicht mehr als zehnmal so groß oder nicht mehr als achtmal so groß wie die maximale Breite sowie die maximale Tiefe bzw. der maximale Durchmesser des Gehäuses 2 sein.

Das Gehäuse 2 kann eine Öffnung 3 umfassen. Die Öffnung 3 kann an einer Stirnseite des dann langgestreckten Gehäuses 2 vorhanden sein. Die Öffnung 3 kann ein offenes Ende eines Hohlzylinders oder eines hohlen Stabs sein. Die Öffnung 3 kann bei einem verbreiterten Ende eines hohlen Stabs vorhanden sein. Es kann ein Verschluss 4 für ein Verschließen der Öffnung 3 vorhanden sein. Der Verschluss 4 kann beispielsweise mithilfe von ein oder mehreren Schrauben 5 befestigt werden. Insbesondere ist es möglich, die Öffnung 3 luftdicht mithilfe des Verschlusses 4 verschließen zu können. Das Innere des Gehäuses 2 kann dadurch luftdicht verschlossen werden. Der Verschluss 4 kann plattenförmig sein.

Die Zelle 1 umfasst zwei elektrische Kontakte 6, 7 für ein Kontaktieren der Anode und der Kathode eines in die Zelle 1 eingesetzten Akkumulators. Zumindest ein elektrischer Kontakt 6, 7 kann verschiebbar innerhalb des Gehäuses 2 angeordnet sein. Beide elektrischen Kontakte können verschiebbar innerhalb des Gehäuses gelagert sein. Ein elektrischer Kontakt 6, 7 kann eine aus Metall bestehende Schicht sein. Das Metall eines elektrischen Kontakts 6, 7 kann Kupfer sein. Die aus Metall bestehende Schicht kann nicht dicker als 1 µm sein. Die Schicht kann auf einem elektrisch nichtleitenden Material aufgebracht sein. Ein elektrischer Kontakt 6, 7 kann langgestreckt sein. Die Länge eines elektrischen Kontakts kann mehr als 1,5mal oder mehr als zweimal so groß wie die maximale Breite sowie die maximale Tiefe bzw. der maximale Durchmesser des elektrischen Kontakts 6, 7 sein. Die Länge eines elektrischen Kontakts kann nicht mehr als fünfmal oder nicht mehr als viermal so groß wie die maximale Breite sowie die maximale Tiefe bzw. der maximale Durchmesser des elektrischen Kontakts 6, 7 sein. Die Länge eines elektrischen Kontakts 6, 7 kann wenigstens 5 mm oder wenigstens 10 mm betragen. Die Länge eines elektrischen Kontakts 6, 7 kann nicht mehr 50 mm oder nicht mehr als 40 mm betragen. Die Länge des langgestreckten Gehäuses 2 kann mehr als fünfmal oder mehr als zehnmal oder mehr als fünfzehnmal so lang wie die Länge eines elektrischen Kontakts 6, 7 sein. Die Länge des langgestreckten Gehäuses 2 kann nicht mehr als 40mal oder nicht mehr als 30mal oder nicht mehr als 20mal so lang wie die Länge eines elektrischen Kontakts 6, 7 sein.

Eine Aufnahme 8 für den Akkumulator kann in einem mittleren Drittel entlang der Länge des langgestreckten Gehäuses 2 angeordnet sein. Mit Aufnahme ist der Bereich innerhalb der Zelle 1 gemeint, in dem sich ein Akkumulator befindet, wenn der Akkumulator mithilfe der Zelle 1 untersucht wird. Die Aufnahme 8 kann sich zwischen den beiden elektrischen Kontakten 6 und 7 befinden. Die Aufnahme 8 kann grundsätzlich luftdicht nach außen abgeschirmt werden.

Die Zelle 1 kann sich zur Aufnahme 8 hin verjüngen. Enden der Zelle 1 weisen dann eine größere Breite sowie eine größere Tiefe bzw. einen größeren Durchmesser auf als ein mittlerer Abschnitt der Zelle 1, in dem sich die Aufnahme 8 befindet.

Die Zelle 1 kann eine Druckausübungseinrichtung vorhanden umfassen, durch die ein Druck auf einen in der Aufnahme 8 befindlichen Akkumulator ausgeübt werden kann. Die Druckausübungseinrichtung kann eine Schraube 9 umfassen, mit der ein Druck eingestellt werden kann. Die Schraube 9 kann in eine Stirnseite der Zelle 1 hineingeschraubt werden. Durch das Hineinschrauben kann ein Druck eingestellt werden, der dann auf einen eingesetzten Akkumulator ausgeübt werden kann.

Die Zelle 1 kann einen verschiebbar gelagerten Stab 10 umfassen. Der Stab 10 kann einen elektrischen Kontakt 6 mittelbar oder unmittelbar elektrisch kontaktieren. Über den Stab 10 kann während des Betriebs ein elektrischer Strom fließen, um einen eingesetzten Akkumulator zu laden oder zu entladen. Der Stab 10 kann gegenüber dem Gehäuse 2 elektrisch isoliert sein oder aber an eine Innenwand des Gehäuses 2 angrenzen, die aus einem elektrisch isolierenden Material besteht. Der Stab 10 kann aus Metall bestehen. Der Stab 10 kann beispielsweise aus Stahl bestehen. Der Stab 10 kann innerhalb des Gehäuses 2 angeordnet sein. Der Stab 10 kann innerhalb eines hohlen Stabs oder innerhalb eines Hohlzylinders des Gehäuses 2 angeordnet sein. Der Stab 10 kann beispielsweise innerhalb des Gehäuses 2 entlang der Länge des Gehäuses 2 verschoben werden. Durch das Verschieben kann von der Druckausübungseinrichtung ein Druck auf einen in der Aufnahme 8 befindlichen Akkumulator mittelbar oder unmittelbar übertragen werden.

Die Länge des Stabes 10 kann um ein Mehrfaches den maximalen Durchmesser des Stabes 10 bzw. seine maximale Breite und seine maximale Tiefe übersteigen. Die Länge des Stabes 10 kann um mehr als das Zweifache oder mehr als das Fünffache den maximalen Durchmesser des Stabes 10 bzw. seine maximale Breite und seine maximale Tiefe übersteigen. Die Länge des Stabes 10 kann um nicht mehr als das 20fache oder nicht mehr als das 15fache den maximalen Durchmesser des Stabes 10 bzw. seine maximale Breite und seine maximale Tiefe übersteigen. Anstelle eines Stabes 10 können zwei oder mehr Stäbe 10 hintereinander angeordnet sein. Durch die ein oder mehreren Stäbe 10 kann ein Druck übertragen werden, der beispielsweise durch die Schraube 9 eingestellt werden kann. Die Schraube 9 kann durch den Verschluss 4 hindurchgeführt sein. Der Verschluss 4 kann dann wie ein Flansch geformt sein.

Es kann eine Feder 11 vorhanden sein, über die ein Druck von der Druckausübungseinrichtung auf einen in der Aufnahme 8 befindlichen Akkumulator mittelbar oder unmittelbar übertragen werden kann. Die Feder 11 kann aus Metall bestehen, damit ein elektrischer Strom durch die Feder hindurchfließen kann. Die Feder 11 kann von einem vorgenannter Stab 10 gehalten sein. Ein sich verjüngendes Ende eines vorgenannten Stabs 10 kann beispielsweise in die Feder 11 hineinreichen. Die Feder 11 kann eine Schraubenfeder sein. Die Feder 11 kann gegenüber dem Gehäuse 2 elektrisch isoliert sein oder an eine Innenwand des Gehäuses 2 angrenzen, die aus einem elektrisch isolierenden Material besteht.

Die Feder 11 kann zwischen einem vorgenannten Stab 10 und einem verschiebbar gelagerten elektrischen Kontakt 6 angeordnet sein. Durch die Feder 11 kann einen Druck mittelbar oder unmittelbar auf den elektrischen Kontakt 6 dann übertragen werden. Der elektrische Kontakt 6 kann dann einen Druck auf einen Akkumulator ausüben, der in die Aufnahme 8 eingesetzt ist.

Es kann ein verschiebbar gelagerter Stempel 12 vorhanden sein, über den ein Druck von der Druckausübungseinrichtung auf einen Akkumulator übertragen werden kann, der in die Aufnahme 8 eingesetzt ist. Der Stempel 12 kann aus Metall bestehen, damit ein Strom durch den Stempel 12 hindurchfließen kann. Der Stempel 12 kann gegenüber dem Gehäuse 2 elektrisch isoliert sein. Der Stempel 12 kann an eine Innenwand des Gehäuses 2 angrenzen, die aus einem elektrisch isolierenden Material besteht. Der Stempel 12 kann sich zwischen einem elektrischen Kontakt 6 und der Feder 11 befinden. Ein Ende des Stempels 12 kann in die Feder 11 hineinreichen. Die Feder 11 kann auf Vorsprüngen oder einem umlaufenden Vorsprung 13 des Stempels 12 aufsitzen. Durch den Stempel 12 kann beispielsweise ein Druck von der Feder 11 auf einen elektrischen Kontakt 6 übertragen werden.

Es kann ein Faltenbalg 14 vorhanden sein, über den Druck von einer Druckausübungseinrichtung auf einen eingesetzten Akkumulator mittelbar oder unmittelbar übertragen werden kann. Der Faltenbalg 14 kann aus Metall bestehen. Durch den Faltenbalg 14 kann dann ein elektrischer Strom fließen. Der Faltenbalg 14 kann innerhalb eines zum Beispiel verbreiterten Bereichs des Gehäuses 2 angeordnet sein. Der Faltenbalg 14 kann zwischen zwei Stäben 10 angeordnet sein. Der Faltenbalg 14 kann gegenüber dem Gehäuse 2 elektrisch isoliert sein oder an eine elektrisch isolierende Innenwand des Gehäuses 2 angrenzen. Die Außenseite des Faltenbalgs 14 kann an einer Innenwand des Gehäuses 2 anliegen, um zumindest dazu beizutragen, die Aufnahme 8 nach außen hin luftdicht abzuschirmen. Zumindest eine Seite des Faltenbalgs kann geschlossen sein, um zumindest dazu beizutragen, die Aufnahme 8 nach außen hin luftdicht abzuschirmen. Die Öffnung 3 kann durch den Faltenbalg 14 verschlossen sein.

Der eine elektrische Kontakt 6, der Stempel 12, die Feder 11, Faltenbalg 14 und/oder die ein oder mehreren Stäbe 10 können mit Spiel innerhalb des Gehäuses 2 angeordnet sein, um mit geringem Kraftaufwand den elektrischen Kontakt 6, den Stempel 12, die Feder 11, den Faltenbalg 14 und/oder die ein oder mehreren Stäbe 10 verschieben zu können. Das Spiel kann klein sein. Das Spiel kann weniger als 1 mm oder weniger als 0,5 mm oder weniger als 0,2 mm betragen.

Ein elektrischer Strom kann über den elektrischen Kontakt 6, den Stempel 12, die Feder 11 und/oder die ein oder mehreren Stäbe 10 zum Akkumulator fließen.

Um eine Aufnahme 8 für einen Akkumulator in einem mittleren Drittel des Gehäuses 2 der Zelle 1 vorsehen zu können, kann ein zweiter Stab 15 innerhalb des Gehäuses 2 vorhanden sein. Der zweite Stab 15 kann aus Metall bestehen. Der zweite Stab 15 kann aus Stahl bestehen. Der zweite Stab 15 kann einen elektrischen Kontakt 7 mittelbar oder unmittelbar elektrisch kontaktieren. Über den zweiten Stab 15 kann während des Betriebs ein elektrischer Strom fließen, um einen eingesetzten Akkumulator aufzuladen oder zu entladen. Der zweite Stab 15 kann innerhalb des Gehäuses 2 verschiebbar gelagert sein. Der zweite Stab 15 kann innerhalb des Gehäuses 2 nicht verschiebbar gelagert sein. Der zweite Stab 15 kann innerhalb des Gehäuses 2 durch einen Hohlzylinder 16 gehalten sein. Der Hohlzylinder 16 kann aus einem elektrisch isolierenden Material bestehen. Der Hohlzylinder 16 kann aus PEEK bestehen. Es kann kein Spiel zwischen dem zweiten Stab 15, dem Hohlzylinder 16 und/oder dem Gehäuse 2 vorhanden sein.

Anstelle von nur einem zweiten Stab 15 können eine Mehrzahl von zweiten Stäben 15 vorhanden sein, die hintereinander angeordnet sind.

Es kann ein Kraftsensor 17 vorhanden sein. Der Kraftsensor 17 kann so angeordnet sein, dass mit dem Kraftsensor ein Druck ermittelt werden kann, der auf einen eingesetzten Akkumulator ausgeübt wird. Der Kraftsensor 17 kann eine Kraft messen, die dann mit dem Wissen der Fläche in ein Druck umgerechnet werden kann.

Der Kraftsensor 17 kann bei einem Ende des zweiten Stabs 15 angeordnet sein. Der zweite Stab 15 ist dann verschiebbar innerhalb des Gehäuses zwei gelagert. Es kann dann mithilfe des Kraftsensor 17 ein Druck ermittelt werden, der auf einen eingesetzten Akkumulator ausgeübt wird. Der Kraftsensor 17 kann innerhalb eines verbreiterten Endes der Zelle 1 vorhanden sein. Ausgehend von diesem verbreiterten Bereich kann sich die Zelle 1 in Richtung Aufnahme 8 verjüngen.

Um einen Verschluss 4 dicht befestigen zu können, kann das Gehäuse einen Hohlstab aufweisen, der einen ersten Abschnitt 18 und einen zweiten Abschnitt 19 umfasst. Der zweite Abschnitt 19 kann einen größeren Durchmesser als der erste Abschnitt 18 aufweisen. Der erste Abschnitt 18 kann durch einen Flansch 20 hindurchgeführt worden sein. Der Flansch 20 kann dann an dem zweiten Abschnitt 19 anliegen. In den Flansch 20 können dann ein oder mehrere Schrauben 5 für ein Befestigen des Verschlusses 4 hineingeschraubt sein.

Der Hohlzylinder 16 kann die zuvor beschriebene Funktion des inneren Hohlstabs übernehmen, also aus diesen Gründen vorgesehen sein. Der Hohlzylinder 16 ist dann kürzer als das äußere hohle Rohr 18, 19. Das hohle Rohr 18, 19 kann also über den Hohlzylinder 16 geschoben werden. Komponenten des Akkumulators können also auf den Hohlzylinder 16 eingesetzt oder in den Hohlzylinder 16 eingesetzt werden. Im Anschluss daran wird das hohle Rohr 18, 19 über den Hohlzylinder 16 geschoben.

Ausgehend von einem verbreiterten Ende der Zelle 1, das den verbreiterten Abschnitt 19 umfassen kann, kann sich die Zelle 1 in Richtung Aufnahme 8 verjüngen.

Ein Dichtring 21 kann sich unterhalb des Verschlusses 4 befinden, um die Öffnung 3 dicht verschließen zu können. Der Dichtring 21 kann elastisch verformt sein Der Dichtring 21 kann dann gegen den zweiten Abschnitt 19 gepresst sein. Der Dichtring 21 kann durch eine Nut gehalten sein. Die Nut kann sich bei der Stirnseite des zweiten Abschnitts 19 befinden. Die Nut kann sich bei der Unterseite des Verschlusses 4 befinden.

Der Verschluss 4 kann an seiner Unterseite beschichtet sein. Die Beschichtung 22 kann beispielsweise aus einem Hartkunststoff bestehen. Die Beschichtung 22 kann dafür vorgesehen sein, die für ein Einstellen eines Drucks vorgesehene Schraube 9 seitlich abzudichten. Anstelle einer Beschichtung 22 kann auch eine separate Schicht vorgesehen sein, die dann kein integraler Bestandteil des Verschlusses 4 ist.

Es kann ein Dichtring 23 vorhanden sein, durch den ein Stab 10 hindurchgeführt ist. Der Dichtring 23 kann sich zwischen einem Stab 10 und einer Innenwand des Gehäuses 2 befinden. Der Dichtring 23 kann für seine Positionierung in eine Nut des Stabes 10 und/oder in eine Nut des Gehäuses 2 hineinreichen. Der Dichtring 23 kann elastisch verformt sein, damit die Aufnahme 8 luftdicht nach außen abgeschirmt werden kann.

Eine Unterseite eines Hohlzylinders oder hohlen Rohrs 18, 19 des Gehäuses 2 kann mit ein oder mehreren Teilen luftdicht verschlossen sein. Zu diesen Teilen können ein oder mehrere Basisteile 24, 25 gehören, die beispielsweise mithilfe von ein oder mehreren Sprengringen 26 an dem Hohlzylinder bzw. dem hohlen Rohr18, 19 befestigt sein können. Ein erster Abschnitt 18 eines Hohlrohrs kann beispielsweise in die ein oder mehreren Basisteile 24, 25 hineinreichen. Eine Verschlussplatte 27 kann mithilfe von Schrauben 28 an der Unterseite von ein oder mehreren Basisteilen 24, 25 befestigt sein. Zwischen einem Basisteil 24,25 und der Verschlussplatte 27 kann ein Dichtring 29 für eine dichte Verbindung sorgen. Der Dichtring 29 kann zwecks Positionierung in eine Nut eines Basisteils 24,25 und/oder eine Nut der Verschlussplatte 27 hineinreichen. Der Dichtring 29 kann elastisch verformt sein.

Ein Dichtring 30 kann sich bei einem stirnseitigen Ende eines Abschnitts 17 eines hohlen Rohrs des Gehäuses 2 befinden, um für eine dichte Verbindung zwischen einem Basisteil 24, 25 und dem hohlen Rohr zu sorgen. Auch dieser Dichtring 30 kann sich in einer Ausnehmung oder einer Nut befinden. Im montierten Zustand kann auch dieser Dichtring 30 elastisch verformt sein.

Der Kraftsensor 17 kann sich innerhalb dieser Teile befinden, die für ein luftdichtes Verschließen vorgesehen sind. Es kann dafür ein Freiraum 31 innerhalb dieser Teile vorgesehen sein. Ein oder mehrere Teile, die für ein luftdichtes Verschließen vorgesehen sind, können aus einem elektrisch leitenden Material bestehen, über die dann während des Betriebs ein Strom für ein Entladen oder Laden eines Akkumulators fließen kann. Ein oder mehrere Teile, die für ein luftdichtes Verschließen vorgesehen sind, können aus einem elektrisch nichtleitenden Material bestehen.

An der Unterseite der genannten Teile kann eine Schicht 32 oder eine Beschichtung vorhanden sein, die beispielsweise aus einem Kunststoff bestehen kann. Diese Schicht 32 bzw. Beschichtung kann für ein problemloses Abstellen der Zelle 1 vorgesehen sein. Diese Schicht kann alternativ oder ergänzend zur elektrischen Isolation gegenüber einer elektrisch leitenden Halterung für die Zelle während des Betriebs vorgesehen sein.

Diese Schicht 32 kann beispielsweise mit der Verschlussplatte 27 verschraubt sein.

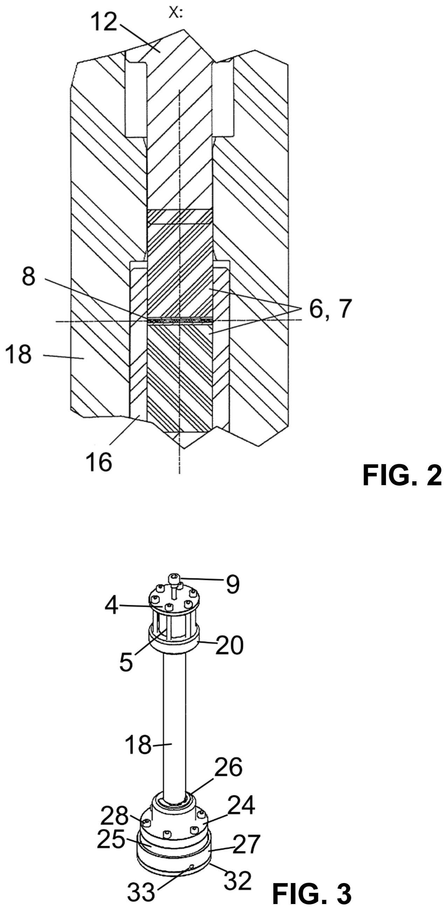

Das Ende der Zelle 1, das für ein Aufstellen vorgesehen sein kann, kann einen Sockel der Zelle 1 bilden. Das andere Ende kann einen Kopf der Zelle 1 bilden. Der Sockel kann schwerer als der Kopf sein, um für Standsicherheit zu sorgen. Um dies zu erreichen, kann Sockel zumindest überwiegend aus einem Material gefertigt sein, das schwere ist als das Material, aus dem der Kopf zumindest überwiegend gefertigt worden ist. Alternativ oder ergänzend kann das Volumen des Sockels größer sein als das Volumen des Kopfes. Um für eine gute Standsicherheit zu sorgen, kann der maximal Durchmesser des Sockels größer sein als der maximale Durchmesser des Kopfes, wie dies beispielsweise in der Figur 3 zu erkennen ist.

Der Kopf kann nach unten hin mit dem Flansch 20 enden. Der Sockel kann nach oben hin beim Sprengring 26 enden.

In der Figur 2 wird ein vergrößerter Ausschnitt aus Figur 1 gezeigt, der in der Figur 1 durch einen mit "x" gekennzeichneten Kreis markiert ist. In die Aufnahme 8 ist ein Akkumulator eingesetzt.

Ein Kabelstrang des Kraftsensors 17 kann beispielsweise durch einen Kanal 33 herausgeführt sein. Der Kanal kann beispielsweise in der Verschlussplatte 27 vorhanden sein, der dann vom Freiraum 31 nach außen führt.

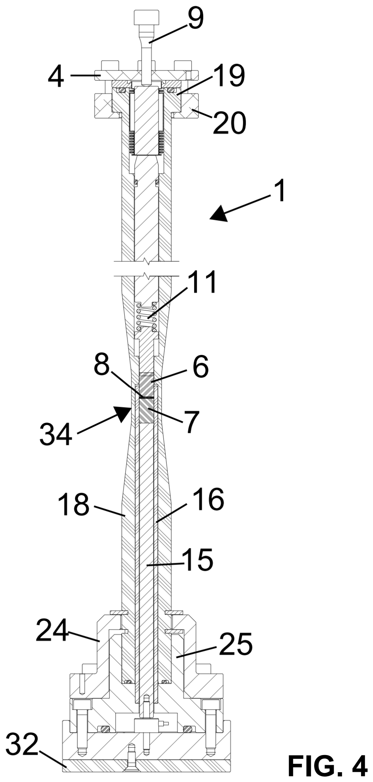

In der Figur 4 wird eine Zelle mit einer Einschnürung 34 auf Höhe einer Aufnahme 8 gezeigt. Es kann so eine Abschwächung einer Röntgenstrahlung im Bereich der Aufnahme 8 besonders geringgehalten werden. Es hat sich aus konstruktiven Gründen vorteilhaft herausgestellt, wenn sich die Aufnahme 8 entlang der Höhe bzw. Länge der Zelle 1 in der unteren Hälfte befindet. Die Aufnahme 8 kann sich in etwa beim Übergang zwischen dem ersten Drittel und dem zweiten Drittel der Zelle 1 befinden.

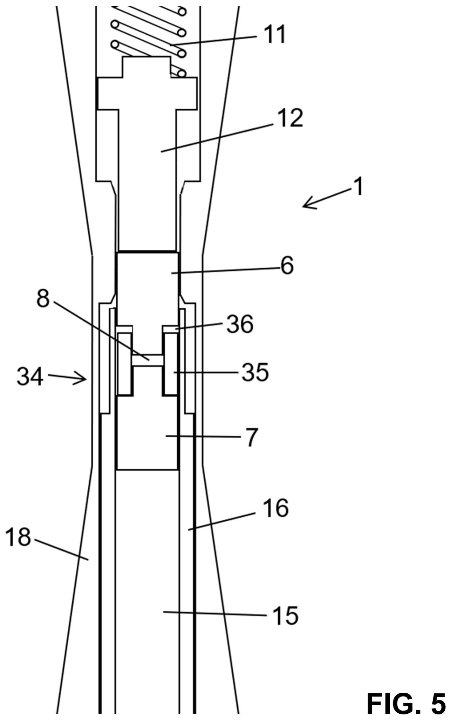

In der Figur 5 wird ein Ausschnitt einer Ausgestaltung einer Zelle 1 mit einer Einschnürung 34 gezeigt. Die Außenwandung eines Abschnitts 18 eines Hohlrohrs kann sich also dann zu dem Bereich der Aufnahme 8 hin verjüngen. Die Einschnürung 34 kann angrenzend an die Aufnahme 8 wie in der Figur 5 gezeigt zylinderförmig sein, um gute Messergebnisse erzielen zu können.

Durch die Einschnürung kann vermieden werden, dass keine besondere Miniaturisierung von sonstigen Komponenten innerhalb des Hohlrohrs erforderlich ist. Die Zelle 1 kann unabhängig von dem Vorhandensein einer Einschnürung 34 einen Hohlzylinder 35 umfassen. Innerhalb des Hohlzylinders 35 kann die Aufnahme 8 vorgesehen sein. Ein Abschnitt des Hohlzylinder 35 kann auf einen unteren elektrischen Kontakt 7 aufgeschoben worden sein. Der untere elektrische Kontakt 7 kann geometrisch angepasst sein, so zum Beispiel durch eine umlaufende Stufe. Der Außendurchmesser des elektrischen Kontakts 7 kann mit dem Außendurchmesser des Hohlzylinders 35 übereinstimmen.

Der Hohlzylinder 35 kann ein aus Kunststoff gebildeter Zylinder sein oder einen aus Kunststoff gebildeten Zylinder umfassen. Der Hohlzylinder 35 kann ein Polymerzylinder sein oder einen Polymerzylinder umfassen. Der Hohlzylinder 35 kann nicht elektrisch leitfähig sein. Der Hohlzylinder 35 kann beschichtet sein. Die Beschichtung kann elektrisch leitfähig sein.

Der untere elektrische Kontakt 7 kann ein beschichteter Kunststoff- bzw. Polymerzylinder sein. Die Beschichtung kann elektrisch leitfähig sein.

Es kann ein oberer elektrischer Kontakt 6 bzw. ein Abschnitt des oberen elektrischen Kontakts 6 in die gegenüberliegende Stirnseite des Hohlzylinders 35 hineingeschoben werden. Die Aufnahme 8 kann sich dann zwischen den beiden elektrischen Kontakten 6 und 7 befinden und für die Aufnahme von kleineren Proben gut geeignet sein. Die beiden elektrischen Kontakte 6 und 7 können gleich sein. Diese können also aus den gleichen Materialien gebildet sein. Diese können geometrisch gleich sein. Dies kann eine Montage und Handhabung erleichtern.

Bevor der obere elektrische Kontakt 7 bzw. ein Abschnitt des oberen elektrischen Kontakts 6 in die gegenüberliegende Stirnseite des Hohlzylinders 35 hineingeschoben wird, kann ein kürzerer hohler Stab 16 eingesetzt werden. Von der Innenwand des kürzeren Hohlstabs 16 kann ein Anschlag 35 nach innen abstehen. Der Anschlag 35 kann beispielsweise wie eine Ringscheibe geformt sein. Der Anschlag 35 kann für ein Halten des Hohlzylinder 35 vorgesehen sein. Der Anschlag 35 kann dann auf dem Hohlzylinder 35 im montierten Zustand aufliegen und so halten.

Auf Höhe des Hohlzylinders kann der kürzere hohler Stab 16 eine reduzierte Wandstärke im Vergleich zur sonstigen Wandstärke des kürzeren hohlen Stabs 16 aufweisen. Eine Abschwächung einer Röntgenstrahlung kann so weiter verbessert verringert werden. Insgesamt kann eine hinreichende mechanische Stabilität des kürzeren hohlen Stabs 16 dennoch gewährleistet werden.

Es kann ein Freiraum 36 zwischen dem Hohlzylinder 35 und einem elektrischen Kontakt 6 geben. Die Höhe der Aufnahme 8 bzw. die Dicke einer in der Aufnahme 8 befindlichen Probe kann dadurch variabel sein.

## Patentansprüche

1. Zelle (1) für ein Untersuchen eines Akkumulators mithilfe von Röntgencomputertomografie mit einem langgestreckten Gehäuse (2) für eine Aufnahme eines Akkumulators, einer Aufnahme (8) für eine Aufnahme des Akkumulators in das langgestreckte Gehäuse (2), mit elektrischen Kontakten (6, 7) für ein Kontaktieren der Elektroden eines eingesetzten Akkumulators, wobei ein elektrischer Kontakt (6, 7) eine aus Metall bestehende Schicht ist, die auf einem elektrisch nicht leitenden Material aufgebracht ist, wobei die aus Metall bestehende Schicht nicht dicker als 1 µm ist.

2. Zelle (1) nach dem vorhergehenden Anspruch, **dadurch gekennzeichnet, dass** die Länge des elektrischen Kontakts (6, 7) wenigstens 5 mm oder wenigstens 10 mm beträgt.

3. Zelle (1) nach einem der vorhergehenden Ansprüche, **dadurch gekennzeichnet, dass** das Metall des elektrischen Kontakts (6, 7) Kupfer ist.

4. Zelle (1) nach einem der vorhergehenden Ansprüche, **dadurch gekennzeichnet, dass** die Aufnahme (8) für den Akkumulator in einem mittleren Drittel entlang der Länge des langgestreckten Gehäuses (2) angeordnet ist.

5. Zelle (1) nach einem der vorhergehenden Ansprüche, **dadurch gekennzeichnet, dass** sich die Zelle (1) von ihren Enden zur Aufnahme (8) hin verjüngt.

6. Zelle (1) nach einem der vorhergehenden Ansprüche, **dadurch gekennzeichnet, dass** eine Druckausübungseinrichtung vorhanden ist, mit der Druck auf einen in der Aufnahme (8) befindlichen Akkumulator ausgeübt werden kann.

7. Zelle (1) nach dem vorhergehenden Anspruch, **dadurch gekennzeichnet, dass** eine Feder (11) vorhanden ist, über die ein Druck von der Druckausübungseinrichtung auf einen in der Aufnahme (8) befindlichen Akkumulator übertragen werden kann.

8. Zelle (1) nach einem der beiden vorhergehenden Ansprüche, **dadurch gekennzeichnet, dass** die Druckeinrichtung eine Schraube (9) für ein Einstellen eines Drucks umfasst.

9. Zelle (1) nach einem der vorhergehenden Ansprüche, **dadurch gekennzeichnet, dass** ein Kraftsensor (17) vorhanden ist und die Zelle so eingerichtet ist, dass ein auf einen in die Aufnahme (8) eingesetzten Akkumulator ausgeübter Druck durch den Kraftsensor gemessen werden kann.

10. Zelle (1) nach einem der vorhergehenden Ansprüche mit Stäben (10, 15) innerhalb des Gehäuses (2), über die ein elektrischer Strom zu den Kontakten (6, 7) fließen kann, wobei die Aufnahme (8) zwischen den Stäben (10, 15) angeordnet ist.

11. Zelle (1) nach dem vorhergehenden Anspruch, **dadurch gekennzeichnet, dass** zumindest ein Stab innerhalb des Gehäuses (2) verschiebbar gelagert ist.

12. Zelle (1) nach einem der vorhergehenden Ansprüche, **dadurch gekennzeichnet, dass** die Zelle (1) so eingerichtet ist, dass die Aufnahme (8) luftdicht abgeschirmt werden kann.

13. Zelle (1) nach einem der vorhergehenden Ansprüche, **dadurch gekennzeichnet, dass** ein Faltenbalg (14) vorhanden ist, über den ein Druck auf einen in der Aufnahme (8) befindlichen Akkumulator ausgeübt werden kann.

14. Zelle (1) nach einem der vorhergehenden Ansprüche, **dadurch gekennzeichnet, dass** die Zelle einen hohlen Stab (18, 19) und einen im Vergleich dazu kürzeren hohlen Stab (16) umfasst, wobei der hohlen Stab (18, 19) über den kürzeren hohlen Stab (16) gestülpt ist.

15. Verfahren für ein Untersuchen eines Akkumulators mit einer Zelle (1) nach einem der vorhergehenden Ansprüche, **dadurch gekennzeichnet, dass** ein Akkumulator in die Aufnahme (8) der Zelle (1) eingesetzt wird und der eingesetzte Akkumulator mithilfe von Röntgentomografie untersucht wird, wobei während der Untersuchung ein Druck auf den Akkumulator ausgeübt wird und der Druck gemessen wird.
